# EUROPEAN PATENT SPECIFICATION

(11) **EP 3 406 485 B1**
(45) Date of publication and mention of the grant of the patent: **18.12.2019**
(21) Application number: 17172210.1
(22) Date of filing: 22.05.2017
(51) Int. Cl.: B60P 3/41, E05F 1/12

(54) **PIVOT JOINT AND HEAD BOARD ASSEMBLY**
DREHGELENK UND STIRNGITTERANORDNUNG
ENSEMBLE D'ARTICULATION À PIVOT ET DE DOSSERET

(43) Date of publication of application: 28.11.2018
(73) Proprietor: Deere & Company, Moline, IL 61265 (US)
(72) Inventor: Auvinen, Perttu J, 68163 Mannheim (DE); Keskinen, Juho, 68163 Mannheim (DE)
(74) Representative: John Deere GmbH & Co. KG

(56) References cited:
- WO-A1-2012/039663
- DE-A1- 19 911 872
- US-A- 5 255 876

## Description

This invention relates to a pivot joint with interfaces for a connection to a head board and a head board extension and to a head board assembly.

Head boards of forwarders serve to position logs loaded by a crane in a load space. In order to minimize the impact of the crane or the logs, when hitting the head board, it is known from WO 2012/039664 A1 to provide a flexible suspension between the head board and a chassis of the forwarder.

The problem this invention is based on is seen in the high costs of such a suspension.

This problem is solved in an innovative way by means of the teaching of claim 1, whereas advantageous features further developing the invention are given in the claims related to claim 1.

By means of this teaching only that part of the head board is made flexible, which is mainly exposed to the moving logs or crane, namely the lateral extension. The inventive pivot joint allows a movement along its pivot axis, i.e. in the vertical direction when installed, such that the lateral head board extension may move downwards when hit by the crane. The interface may be any kind of flange to be welded, riveted or bolted to the head board, a structure holding it and the head board extension. The pivot axle may be a single rod, two stub shafts or rods or similar.

Depending on the circumstances in the connecting area, like dirt, temperature, space, forces, etc. an open structure mechanical spring, like a helical spring, a disc spring or a closed structure pneumatic spring may be used. Said spring may be arranged concentric to the pivot axis or parallel to it.

Rather than a spring between the two interfaces, i.e. in the pivot joint itself, a spring may be provided between one of the interfaces and the head board, the structure or the head board extension. Said spring could be in the kind of a leaf spring, as this is suitable at the same time to carry the head board extension.

As a hit by a crane or log does not necessarily happen straight in one direction, a second spring may be provided, allowing a movement of the gate extension not only in the vertical direction, but also horizontally. While such movement may be very limited, it avoids undue stress on the interfaces and the pivot joints
A very cost effective and little space consuming embodiment of the invention is in the form of a hinge with a pin and a part received on the pin and with a disc spring / Belleville washer or helical spring inter between. Such hinges - without spring - are known from doors or similar.

While pivot joints could be supplied to be inserted between existing head boards or structures and head board extensions, headboard assemblies of a log transporting apparatus can be provided ex-factory with such pivot joints, whereas along the pivot axis more than one pivot joint can be provided. However, it may be sufficient to provide a spring at one pivot joint only, whereas the other pivot joints are not biased.

Likewise headboard assemblies may be provided with a second spring for the pivot joint to allow also a sideward movement.

In order to lock a pivotable lateral head board extension in a non-extend position, elements may be provided at either of the headboard, the structure or the headboard extension, which elements may be in a positive locking relationship in a position of the headboard extension, in which the spring is least biased. I.e. these elements would abut each other and keep the head board extension from pivoting. Only if the head board extension is moved against the force of the spring, e.g. by a hydraulic motor or by the crane, this positive lock can be overcome and the head board extension can be swung into the extension position. This includes elements being connected to the interfaces or other parts of the pivot joint.

In the following one embodiment of the invention is described in more detail and in relation to the drawing. It is shown in:
- Fig. 1: a log transporting apparatus in a perspective view with a head board,

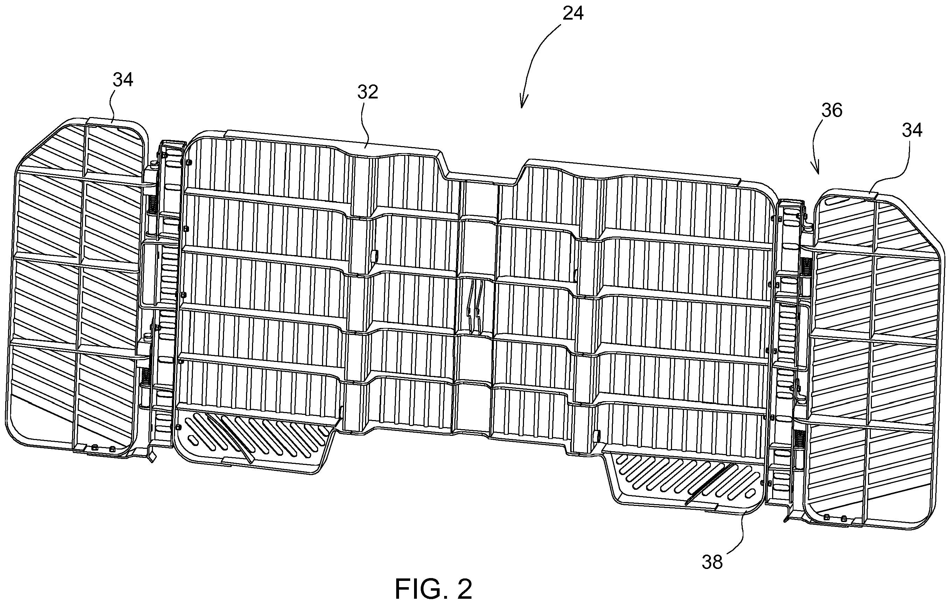

- Fig. 2: a head board assembly with lateral head board extensions connected to the head board by means of pivot joints seen from the front,

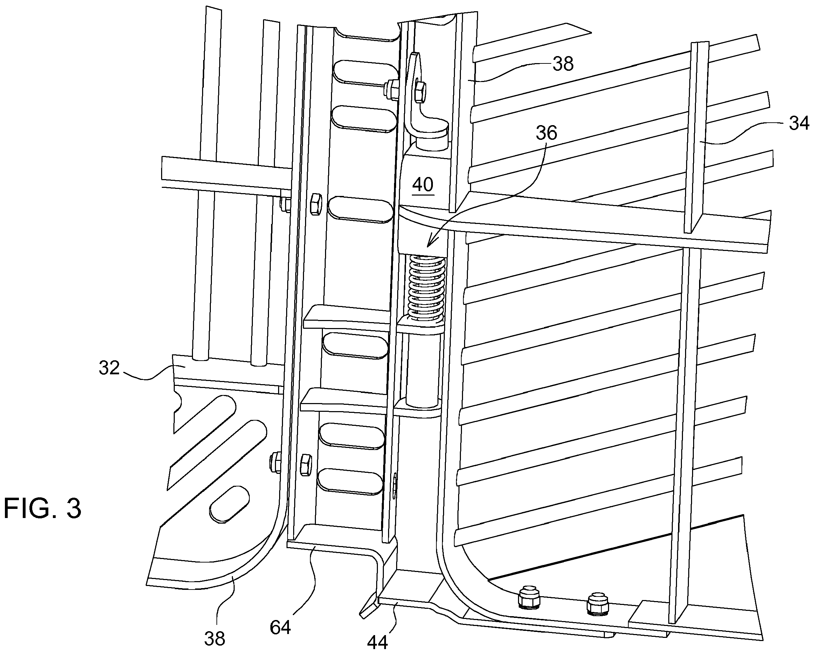

- Fig. 3: a pivot joint in enlarged scale and elements locking a left head board extension against the head board,
- Fig. 4: the pivot joint between a left head board extension in the extended position and the head board in front view, and
- Fig. 5: the pivot joint of the left head board extension in the extended position in a view from the rear.

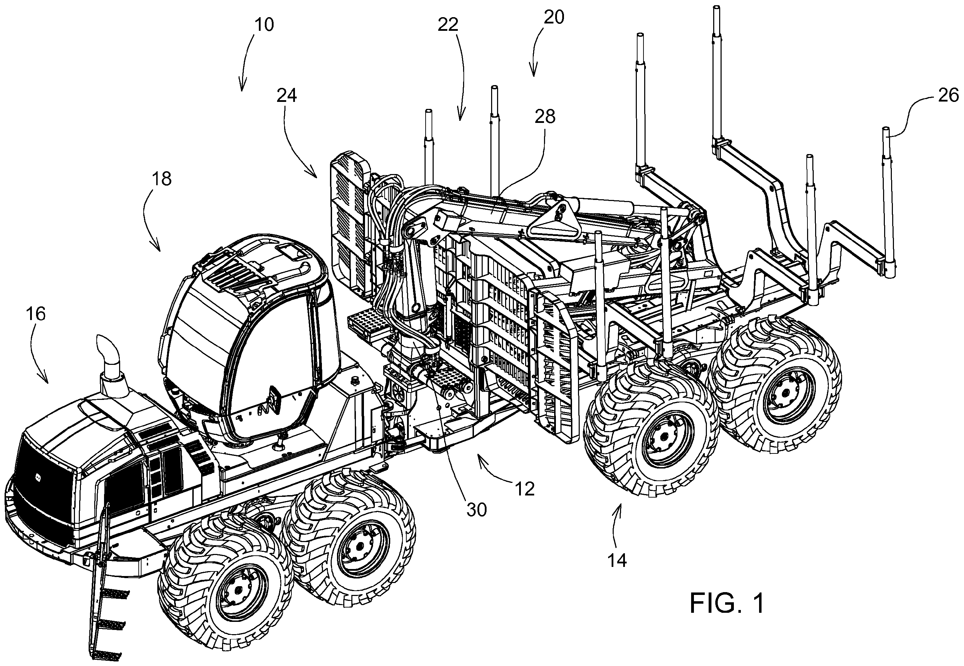

A log transporting apparatus 10 shown in figure 1 is provided with a chassis 12, a carriage 14, an engine compartment 16, a cab 18, a load space 20, a crane 22 and a head board assembly 24.

The log transporting apparatus 10 is shown in the kind of a so-called forwarder, but could be of any other kind, like a trailor, a truck, a wagon or the like - offroad or on tracks.

The chassis 12 is composed of a front and a rear frame, a center pivot and other components well-known in the art and serves to carry the substructures of the log transporting apparatus 10, while it is supported on the ground via the carriage 14.

The carriage 14 comprises wheels borne by bogie axles, but tracks would be an alternative, too.

The engine compartment 16 is located on the front frame and houses an engine providing all the needed power.

The cab 18 is also located on the front frame and is the operator station for a person operating the crane 22.

The load space 20 is a compartment receiving logs and is limited at its underside by the chassis 12, at the front by the head board assembly 24 and at each side by bunks 26; it is open at its top.

The crane 22 is hydraulically operated and has a multipart boom 28 rotating about a bearing 30 at one end and carrying a grapple (not shown) at its opposite end. Said boom 28 can be extended and lifted as this is well known and rotates in planes above an upper edge of the head board assembly 24.

The head board assembly 24 comprises in the center a head board 32 connected to the chassis 12 in a fixed or moveable fashion and has a width not wider than allowed on public roads. The head board 32 is substantially self-carrying, but is fixed via vertical structures to the chassis 12. As it is visible, in the center area down from the upper edge a niche is provided for the boom 28, when it is moved to a lower most position.

The head board assembly 24 is provided on each side also with head board extensions 34 connected to the head board 32 by means of pivot joints 36.

The head board extensions 34, like the head board 32, are made of vertical and horizontal steel bars welded to each other and surrounded by a boarder 38. The head board extensions 34 are substantially of the same height as the head board 32, but much narrower. The head board extensions 34 normally are used in the forest or other non-public traffic areas, as they widen the log transporting apparatus 10 considerably; when they are in use, the bunks 26 are moved from an inner to an outer position to widen the load space 20. The head board extensions 34 can be pivoted between an extended position, in which they extend substantially in the same plane as the head board 32, and a non-extended position, in which they extend to the rear at an angle of about 90 degrees with respect to the head board 32. Attached to a vertical section of the boarder 38 facing the head board 32 are stops 40, which in the extended position of the head board extensions 34 abut against complementary sections of the boarder 38 of the head board 32 and avoid thus a movement beyond the extended position towards the cab 18. Several of these stops 40 may be provided, whereas one of their corners is rounded to allow a pivoting movement between the two positions. At a lower corner area 42 of the head board extension 34 facing the head board 32 an element 44 is attached, like welded or bolted, which element 44 extends beyond the vertical section of the boarder 38 facing the head board 32. At a free end area, the element 44 is slightly bent upwardly for purposes explained later. The element 44 is of steel in the form of a flat bar.

Each pivot joint 36 is provided with an interface 46 to be connected to the head board 32 and with an interface 48 to be connected to the head board extension 34. A pivot axle 50 is provided to connect both and a spring 52 is placed around the axle 50. It has to be noted, that the arrangement of the spring 52 around the axle 50 is specific to this embodiment and is one example of the inventive pivot joint 36 only. Along the height of each head board extension 34 two pivot joints 36 are provided each set allowing a pivot movement about a common vertical or substantially vertical pivot axis.

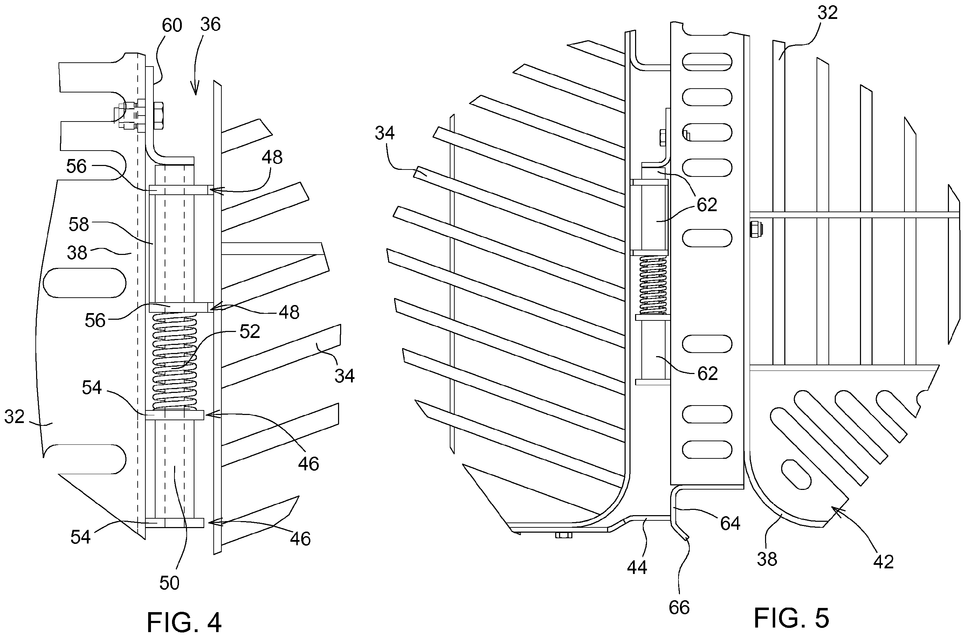

As best seen in figure 4 the interfaces 46 at the head board 32 are made of two distant bars 54 of flat steel welded in parallel perpendicularly to the vertical section of the boarder 38 of the head board 32, i.e. they extend horizontally. Both bars 54 have aligned bores for receiving the pivot axle 50.

As can be seen from figure 4 together with figure 5 the interface 48 of the head board extension 34 also has two bars 56, however being part of a U-shaped bracket comprising also a leg 58 between the bars 56. These bars 56 are likewise provided with bores for the pivot axle 50. The bars 56 and the leg 58 also form the stop 40 in this embodiment.

Furthermore an angle 60 is provided at the boarder 38 of the head board 32, whereas said angle 60 extends into a space above the bores. The angle 60 is located so far away from the bars 54, that the bars 56 can be inserted inter between and still space exists for the spring 52.

A space is provided between the upper bar 54 at the head board 32 and the adjacent lower bar 56 at the head board extension 34, when assembled and this space is suited to receive the spring 52 in a non-biased or slightly biased state.

Finally three sleeves 62 are provided to surround the pivot axle 50.

Another element 64 is bolted to the lower horizontal section of the boarder 38 of the head board 32, which element 64 again is made of flat steel and extends vertically first and then transits to a slant 66 towards the horizontal section of the boarder 38 of the head board 32. Instead of this, the lower edge of the boarder 38 of the head board 32 could be formed accordingly.

Based on this structural description, the head board assembly 24 is composed as follows.

Interface 46 for the head board 32, in this case the bars 54 are connected to the head board 32 by welding above each other, with a space sufficient to receive one of the sleeves 62 and whereas the bores are aligned with each other. Interface 48 for the head board extension 34, in this case the U-shaped stop 40, consisting of the bars 56 and the leg 58 are welded to the boarder 38 of the head board extension 34 in a way, that, when the head board extension 34 is connected to the head board 32, a space sufficient, to receive the spring 52 exists. In the space between the bars 56 another sleeve 62 is inserted, aligned with the bores. This is done for each pivot joint 36. The head board extension 34 is placed at the correct relationship to the head board 32. When the head boards 34 are place correctly, a spring 52 is place at least at one pivot joint 36 per head board extension 34 in the space between the interfaces 46, 48. A third sleeve 62 is place onto the top bar 56 aligned with the bore and the pivot axle 50 is inserted through all bores, sleeves 62 and the spring 52 until it reaches the lowermost bar 54, where is it fixed axially in a non-shown but well known way, like with a should, a radial screw, etc. Finally the angle 60 is fastened to the head board 32 to abut the top of the pivot axle 50 and fix its axial position. Both elements 44 and 64 are connected to the head board 32 and the head board extension 34 such, that when all pivot joints 36 are connected, the front edge of the element 44 connected to the head board extension 34 rests on its full length at the face of the element 64 connected to the head board 32 above the slant 66, when the head board extension 34 is in its extending position.

With this assembly the pivot axle 50 is kept in the interface 46 of the heard board 32 but the interface 48 of the head board extension 34 rests against the top of the spring 52 and can move against the virtue of the spring 52 along the pivot axle 50.The head board extension 34 is locked in its extended position because the stop(s) 40 rest against the boarder 38 or another side face of the head board 32 and the elements 44, 64 abut each other. I order to move the head board extension 34 to the non-extended position the head board extension 34 is pressed down against the force of the spring 52 such, that the edge of the element 44 gets to the height of the slant 66, which allows a pivot movement of the head board extension 34 to the rear.

When logs are loaded by means of the crane 22 and such a log or the boom 28 hit the head board extension 34 on its top, it will give way downwardly as much as the spring 52 allows.

## Claims

1. Head board assembly (24) of a log transporting apparatus (10) **characterized by** at least one lateral head board extension (34), connected to a head board (32) or a structure holding the head board (32) by means of a pivot joint (36),
the pivot joint (36) having one interface (46) to be connected to the head board (32) or the structure and one interface (48) to be connected to the head board extension (34) of the log transporting apparatus (10) and having a pivot axle (50) connected to both interfaces (46, 48), whereas a spring (52) allowing a movement in the direction of a pivot axis is provided at or between the interfaces (46, 48).

2. Head board assembly according to claim 1, whereas the spring (52) is a mechanical or pneumatic spring.

3. Head board assembly according to claim 1 or 2, whereas the spring (52) is a leaf spring connected to at least one of the interfaces (46, 48).

4. Head board assembly according to one or more of the previous claims, whereas a second spring acts in a direction radially to the pivot axis.

5. Head board assembly according to one or more of the preceding claims, the pivot joint (36) being in the form of a hinge with a pin and a part received on the pin and with a bell washer or helical spring inter between.

6. Headboard assembly according to claim 1 and 4, whereas one of the interfaces (46, 48) is connected relatively moveable against the virtue of the second spring to either of the headboard (32), the structure or the head board extension (34).

7. Head board assembly according to claim 1 or 6, having two elements (44, 64) each fastened with either of the headboard (32), the structure or the headboard extension (34), the elements (44, 64) being in a positive locking relationship in a position of the head board extension (34), in which the spring (52) acting in the direction of the pivot axis is least biased.

## Patentansprüche

1. Stirngitteranordnung (24) einer Holzstammtransportvorrichtung (10),
**gekennzeichnet durch** wenigstens eine seitliche Stirngitterverlängerung (34), die mittels eines Drehgelenks (36) mit einem Stirngitter (32) oder einer das Stirngitter (32) haltenden Struktur verbunden ist,
wobei das Drehgelenk (36) ein mit dem Stirngitter (32) oder der Struktur zu verbindendes Zwischenstück (46) und ein mit der Stirngitterverlängerung (34) der Holzstammtransportvorrichtung (10) zu verbindendes Zwischenstück (48) aufweist und eine Drehachse (50) aufweist, die mit beiden Zwischenstücken (46, 48) verbunden ist, wobei eine Feder (52), die eine Bewegung in der Richtung einer Drehachse ermöglicht, an oder zwischen den Zwischenstücken (46, 48) vorgesehen ist.

2. Stirngitteranordnung nach Anspruch 1, wobei die Feder (52) eine mechanische oder pneumatische Feder ist.

3. Stirngitteranordnung nach Anspruch 1 oder 2, wobei die Feder (52) eine Blattfeder ist, die mit wenigstens einem der Zwischenstücke (46, 48) verbunden ist.

4. Stirngitteranordnung nach einem der vorhergehenden Ansprüche, wobei eine zweite Feder in einer radial zu der Drehachse verlaufenden Richtung wirkt.

5. Stirngitteranordnung nach einem der vorhergehenden Ansprüche, wobei das Drehgelenk (36) in Form eines Scharniers mit einem Stift und einem auf dem Stift aufgenommenen Teil und mit einer dazwischenliegenden Tellerfeder oder Schraubenfeder vorliegt.

6. Stirngitteranordnung nach den Ansprüchen 1 und 4, wobei eines der Zwischenstücke (46, 48) relativ bewegbar gegen die Wirkung der zweiten Feder mit dem Stirngitter (32), der Struktur oder der Stirngitterverlängerung (34) verbunden ist.

7. Stirngitteranordnung nach Anspruch 1 oder 6, die zwei Elemente (44, 64) aufweist, die jeweils an dem Stirngitter (32), der Struktur oder der Stirngitterverlängerung (34) befestigt sind, wobei sich die Elemente (44, 64) in einer Position der Stirngitterverlängerung (34), in der die in der Richtung der Drehachse wirkende Feder (52) am wenigsten vorgespannt ist, in einem formschlüssigen Verhältnis befinden.

## Revendications

1. Ensemble de dosseret (24) d'un appareil de transport de grumes (10) **caractérisé par** au moins une rallonge latérale de dosseret (34), reliée à un dosseret (32) ou à une structure maintenant le dosseret (32) au moyen d'une articulation à pivot (36),
l'articulation à pivot (36) comportant une interface (46) à relier au dosseret (32) ou à la structure et une interface (48) à relier à la rallonge de dosseret (34) de l'appareil de transport de grumes (10) et comportant un axe de pivotement (50) relié aux deux interfaces (46, 48), un ressort (52) permettant un mouvement dans la direction de l'axe de pivotement étant prévu sur ou entre les interfaces (46, 48).

2. Ensemble de dosseret selon la revendication 1, dans lequel le ressort (52) est un ressort mécanique ou pneumatique.

3. Ensemble de dosseret selon la revendication 1 ou 2, dans lequel le ressort (52) est un ressort à lames relié à au moins l'une des interfaces (46, 48).

4. Ensemble de dosseret selon l'une ou plusieurs des revendications précédentes, dans lequel le second ressort agit dans une direction radiale par rapport à l'axe de pivot.

5. Ensemble de dosseret selon l'une ou plusieurs des revendications précédentes, l'articulation à pivot (36) se présentant sous la forme d'une charnière avec une broche et une pièce reçue sur la broche et avec une rondelle en cloche ou un ressort hélicoïdal interposé au milieu.

6. Ensemble de dosseret selon les revendications 1 et 4, dans lequel l'une des interfaces (46, 48) est reliée de manière relativement mobile, contre l'effet de poussée du ressort du second ressort, à un élément parmi le dosseret (32), la structure ou la rallonge de dosseret (34) .

7. Ensemble de dosseret selon la revendication 1 ou 6, comportant deux éléments (44, 64) fixés chacun avec un élément parmi le dosseret (32), la structure ou la rallonge de dosseret (34), les éléments (44, 64) étant en relation de verrouillage positif dans une position de la rallonge de dosseret (34), dans laquelle le ressort (52) agissant en direction de l'axe de pivot est le moins sollicité.
